# EUROPÄISCHE PATENTANMELDUNG

(11) **EP 4 553 997 A1**
(43) Veröffentlichungstag der Anmeldung: **14.05.2025**
(21) Anmeldenummer: 23208959.9
(22) Anmeldetag: 10.11.2023
(51) Int. Cl.: H01P 1/06, H02J 50/10, H04B 5/72, H04B 5/79

(54) **ELEKTRISCHER VERBINDER**

(71) Anmelder: ROSENBERGER HOCHFREQUENZTECHNIK GMBH & CO. KG, 83413 Fridolfing (DE)
(72) Erfinder: Reuther, Max, 83410 Laufen (DE); Kozel, Herbert, 83395 Freilassing (DE)
(74) Vertreter: Lorenz, Matthias

(57) **Zusammenfassung**

Die Erfindung betrifft einen elektrischen Verbinder (1). Der elektrische Verbinder (1) weist eine Antenne (3) zur kontaktlosen Datenübertragung und eine hülsenförmige Spule (2) zur kontaktlosen Energieübertragung auf. Dabei weist die Spule (2) eine erste Durchführung (4) zwischen einem luftschnittstellenseitigen axialen Ende (5) der Spule (2) und einem antennenseitigen axialen Ende (6) der Spule (2) auf. Ein hülsenförmiger elektromagnetischer Absorber (7) weist eine zweite Durchführung (8) auf, welche für eine elektromagnetische Welle ausbreitbar ausgebildet ist. Der Absorber (7) ist innerhalb der ersten Durchführung (4) angeordnet und die Antenne (3) ist derart relativ zu dem antennenseitigen axialen Ende (6) angeordnet, dass eine Hauptstrahlrichtung HR_{D} der Antenne (3) durch die zweite Durchführung (8) verläuft.

## Beschreibung

### GEBIET DER ERFINDUNG

Die vorliegende Erfindung betrifft einen elektrischen Verbinder.

### TECHNISCHER HINTERGRUND

In einer steckbaren und wieder lösbaren Verbindung zur Übertragung von Daten und von elektrischer Energie sind elektrische Steckverbindungen aus einem elektrischen Steckverbinder und einem zugehörigen elektrischen Gegensteckverbinder bekannt. Im gesteckten Zustand der Steckverbindung kontaktieren Kontaktelemente des Steckverbinders zugehörige Gegenkontaktelemente des Gegensteckverbinders.

Bei hohen Steckzyklen einer Steckverbindung kommt es zum Abrieb an den Kontaktelementen. Im Lauf der Zeit bilden sich an den Kontaktelementen Oxidationen. Bei der Übertragung von elektrischer Energie kommt es im Steck- und im Lösevorgang einer Steckverbindung zur Energieübertragung jeweils zu einem Funkenüberschlag zwischen den Kontaktelementen. In allen drei Fällen verschlechtert sich die elektrische Übertragungscharakteristik der Steckverbindung auf Dauer. Um die genannten technischen Nachteile zu überwinden, wird in der DE 10 2021 108 236 A1 ein Kopplungssystem zur drahtlosen und somit kontaktlosen Daten- und Energieübertragung zwischen zwei Kopplungseinrichtungen beschrieben. Die Kopplungseinrichtung umfasst eine Kommunikationseinrichtung zur drahtlosen Datenübertragung und eine Spule mit Ferritkern zur drahtlosen Energieübertragung.

Heutzutage verfügbare elektrische Verbinder zur kontaktlosen Energie- und Datenübertragung sind allerdings in ihrer Datenrate stark limitiert und können in diesem Punkt mit kontaktierenden Verbindern nicht mithalten. So schaffen auf dem Markt verfügbare Verbinder maximal eine Datenrate von 100 Mbit/s. Die Übertragung schneller Ethernet-Protokolle, wie beispielsweise Gigabit Ethernet, ist damit folglich nicht möglich. Außerdem haben verfügbare kontaktlose Verbinder den Nachteil eines hohen Stromverbrauchs aufgrund von aufwändigen elektronischen Schaltungen zur Signalverarbeitung der Datenübertragung. Dieser erhöhte Stromverbrauch führt im Ergebnis zu einer Verringerung der Effizienz der Energieübertragung.

### BESCHREIBUNG DER ERFINDUNG

Vor diesem Hintergrund liegt der vorliegenden Erfindung die Aufgabe zugrunde, die Übertragungsqualität zwischen den beiden Kopplungseinrichtungen zu verbessern.

Erfindungsgemäß wird diese Aufgabe durch einen elektrischen Verbinder mit den Merkmalen des Patentanspruchs 1 gelöst.

### Demgemäß ist vorgesehen:

Ein elektrischer Verbinder aufweisend
- eine Antenne zur kontaktlosen Datenübertragung,
- eine hülsenförmige Spule zur kontaktlosen Energieübertragung aufweisend
- eine erste Durchführung zwischen einem luftschnittstellenseitigen axialen Ende der Spule und einem antennenseitigen axialen Ende der Spule und
- einen hülsenförmigen elektromagnetischen Absorber aufweisend
- eine zweite Durchführung, welche für eine elektromagnetische Welle ausbreitbar ausgebildet ist bzw. insbesondere so ausgebildet ist, dass sich eine elektromagnetische Welle durch die zweite Durchführung bzw. in der zweiten Durchführung auszubreiten vermag,
- wobei der Absorber innerhalb der ersten Durchführung angeordnet ist und
- die Antenne derart relativ zu dem antennenseitigen axialen Ende angeordnet ist, dass eine Hauptstrahlrichtung HR_{D} der Antenne durch die zweite Durchführung verläuft.

Hierbei und im Folgenden wird die Durchführung der Spule als erste Durchführung und die Durchführung des Absorbers als zweite Durchführung bezeichnet. Da in der ersten Durchführung der Absorber angeordnet ist und die Hauptstrahlrichtung der Antenne durch die zweite Durchführung verläuft, werden Anteile der abgestrahlten elektromagnetischen Welle und/oder der empfangenen elektromagnetischen Welle, die sich jeweils nicht entlang der Hauptstrahlrichtung der Antenne ausbreiten vom Absorber absorbiert und somit vorteilhaft nicht an der Spule reflektiert. Folglich kann eine Mehrwegeausbreitung der elektromagnetischen Welle verhindert oder zumindest reduziert werden. Dies führt zu geringeren Kanalverzerrungen und damit zu einer Absenkung der Bitfehlerrate und/oder zu einer Erhöhung der Datenrate bei einer Kommunikation zwischen Verbinder und Gegenverbinder.

Aufgrund der geringeren Kanalverzerrungen ist ein geringerer Signalverarbeitungsaufwand und damit ein geringerer Energiebedarf erforderlich. Dies verbessert die Effizienz der Energieübertragung.

Ein elektromagnetischer Absorber, insbesondere ein Hochfrequenz-Absorber, ist aus einem Material hergestellt, das eine Reflexion einer einfallenden elektromagnetischen Welle zumindest dämpft oder vorzugsweise verhindert. Der Absorber eines elektrischen Verbinders absorbiert hierbei sowohl Anteile der von der Antenne des elektrischen Verbinders emittierten elektromagnetischen Welle als auch Anteile der von der Antenne des elektrischen Gegenverbinders emittierten elektromagnetische Welle. Bei ihrer Ausbreitung im Inneren der Spule kann die elektromagnetische Welle somit nicht mehr oder zumindest nur abgeschwächt zur Spule gelangen und wird damit an der Spule nicht oder nur abgeschwächt reflektiert. Der Absorber weist dabei vorzugsweise eine Transmissionsdämpfung von mindestens 40 dB/cm, bevorzugt von mindestens 60 dB/cm, besonders bevorzugt von mindestens 70 dB/cm bei der Trägerfrequenz der zu übertragenden elektromagnetischen Welle der Datenübertragung auf.

Der Absorber ist hülsenförmig ausgebildet. Unter einem hülsenförmigen Absorber ist hierbei und im Folgenden ein Absorber-Körper zu verstehen, der entlang einer Längsachse die zweite Durchführung aufweist. Die zweite Durchführung ist derart ausgebildet, dass sich eine elektromagnetische Welle darin ausbreiten kann. Somit kann die zweite Durchführung vorzugsweise mit Luft gefüllt sein. Alternativ kann die zweite Durchführung zumindest teilweise mit einem dielektrischen Material gefüllt sein, das eine elektromagnetische Welle nur geringfügig dämpft. Unter einer geringfügigen Dämpfung des dielektrischen Materials ist hierbei insbesondere eine Transmissionsdämpfung von weniger als 10 dB/cm, bevorzugt weniger als 5 dB/cm, besonders bevorzugt weniger als 3 dB/cm bei der Trägerfrequenz der zu übertragenden elektromagnetischen Welle der Datenübertragung zu verstehen. Alternativ kann die Dämpfung des dielektrischen Materials über den Tangens des dielektrischen Verlustwinkels δ angegeben werden. Unter einer geringfügigen Dämpfung ist hierbei insbesondere ein tan (δ**)** von weniger als 0,05, bevorzugt von weniger als 0,025, besonders bevorzugt von weniger als 0,01, bei der Trägerfrequenz der zu übertragenden elektromagnetischen Welle der Datenübertragung zu verstehen.

Die zweite Durchführung ist vorzugsweise von einem Mantelbereich des Absorbers umhüllt. Wenigstens eines der beiden stirnseitigen Enden des hülsenförmigen Absorbers ist vorzugsweise jeweils offen ausgebildet oder jeweils mit einem dielektrischen Material mit einer geringfügigen Dämpfung zumindest teilweise ausgefüllt.

Vorzugsweise weist der Mantelbereich des hülsenförmigen Absorbers eine ausreichende Mindestwandstärke auf. Die Mindestwandstärke beträgt vorzugsweise mindestens 1 mm, besonders bevorzugt mehr als 5 mm. Die Wandstärke des hülsenförmigen Absorbers kann konstant ausgebildet sein, kann aber auch in Längserstreckungsrichtung und/oder in Umfangrichtung veränderlich verwirklicht sein.

Der Mantelbereich kann frei von Durchbrüchen ausgebildet sein, um eine weitestgehend vollständige Absorption einer auf den Mantelbereich einfallenden elektromagnetischen Welle zu bewirken. Erfindungsgemäß kann der Mantelbereich des Absorbers auch Durchführungen, beispielsweise Schlitze, und/oder Poren aufweisen. Hierdurch kann die effektive Dielektrizitätszahl εᵣ des Absorbers reduziert werden. Dies kann zu einer höheren Reflexionsdämpfung des Absorbers führen.

Die Geometrie des Absorbers, insbesondere die Außengeometrie des Absorbers, ist vorzugsweise so bemessen, dass sich ein Spalt, vorzugsweise ein Luftspalt, zwischen einem Außenmantel des Absorbers und der Spule befindet. Somit kann der Absorber direkt an der Antenne ausgerichtet werden, ohne dass die Spule seine relative Lage zur Antenne beeinflussen würde. Die Außengeometrie des Absorbers entspricht vorzugsweise der Innengeometrie der ersten Durchführung.

Unter einem elektrischen Verbinder zur kontaktlosen Übertragung von elektrischer Energie und Daten wird hierbei und im Folgenden insbesondere eine Vorrichtung verstanden, die ausgebildet ist, durch Abstrahlung und Empfang elektromagnetischer Felder elektrische Energie und Daten zu einem zugehörigen elektrischen Gegenverbinder zu übertragen. Der Verbinder und der Gegenverbinder können berührungsfrei, in einer gegenseitigen Berührung oder in einer gegenseitigen mechanischen Verbindung, beispielsweise in einer Steckverbindung, angeordnet sein. Der Verbinder und der Gegenverbinder können sich im Betrieb relativ zueinander translatorisch und/oder rotatorisch bewegen. Damit kann beispielsweise der besonders verschleißbehaftete Einsatz von Schleifkontakten und/oder von sich mitbewegenden und damit mechanischer Belastung ausgesetzter Kabel vermieden werden. Alternativ können der Verbinder und der Gegenverbinder auch starr zueinander fixiert sein.

Der Verbinder weist eine Antenne zur kontaktlosen Datenübertragung auf. Dabei sind im Rahmen der Erfindung verschiedene Antennentypen möglich. Insbesondere kann die Antenne als eine Flachantenne, beispielsweise als eine Patch-Antenne oder als eine Schlitzantenne, ausgebildet sein. Alternativ oder in Ergänzung können auch eine Hornantenne und/oder andere Antennentypen zum Einsatz kommen. Die Antenne kann auch ein oder mehrere Antennenarrays umfassen, beispielsweise ein Sendeantennenarray und ein Empfangsantennenarray oder ein gemeinsames Sende-Empfang-Antennenarray.

Die Hauptstrahlrichtung einer Antenne ist eine Richtung im Richtdiagramm der Antenne, in der die Antenne eine maximale Leistung abstrahlen und eine maximale Leistung empfangen kann. Die Hauptstrahlrichtung ist also sowohl die Hauptabstrahl- als auch die Hauptempfangsrichtung.

Des Weiteren weist der elektrische Verbinder eine hülsenförmige Spule auf. Unter einer hülsenförmigen Spule wird hierbei und im Folgenden ein Spulenkörper aus einem spiralförmig oder schneckenförmig gebogenen und elektrisch leitenden Draht verstanden. Die Spule des Verbinders kann, wenn sie von einem Wechselstrom durchflossen wird, in einer stirnseitig angeordneten und ebenfalls hülsenförmig ausgebildeten Spule eines Gegenverbinders einen Wechselstrom induzieren. Auf diese Weise lässt sich induktiv Energie zwischen dem Verbinder und dem zugehörigen Gegenverbinder jeweils in einer Richtung übertragen. In der kontaktlosen Energieübertragung kann eine Leistung zwischen 1 mW und 10 kW, vorzugsweise zwischen 1 W und 100 W übertragen werden.

Es sind verschiedene geometrische Formen der Spule möglich. Das Querschnittsprofil orthogonal zur Längsachse der Spule kann kreisförmig, elliptisch oder polygonal, d. h. n-eckförmig, insbesondere dreieckig, viereckig, fünfeckig, sechseckig, siebeneckig, achteckig usw. sein.

Die erste Durchführung der Spule erstreckt sich zwischen einem luftschnittstellenseitigen axialen Ende der Spule und einem antennenseitigen axialen Ende der Spule. Das antennenseitige axiale Ende ist das der Antenne zugewandte axiale Ende der Spule. Das luftschnittstellenseitige axiale Ende ist das der Antenne abgewandte axiale Ende der Spule.

Erfindungsgemäß ist innerhalb der ersten Durchführung der hülsenförmigen Spule der hülsenförmige Absorber angeordnet und die Antenne derart relativ zu dem antennenseitigen axialen Ende der Spule angeordnet, dass eine Hauptstrahlrichtung der Antenne durch die zweite Durchführung verläuft. Damit ist gesichert, dass sich ein Großteil der elektromagnetischen Welle, welche von der Antenne abgestrahlt wird und/oder von der Antenne empfangen wird, sowohl innerhalb der hülsenförmigen Spule als auch innerhalb der zweiten Durchführung des hülsenförmigen Absorbers ausbreiten kann. Anteile der abgestrahlten und/oder der empfangenen elektromagnetischen Welle, die sich nicht parallel zur Hauptstrahlrichtung der Antenne des Verbinders ausbreiten, können an der Innenmantelfläche des Absorbers auftreffen und vom Absorber vorteilhaft absorbiert werden.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

In einer vorzugsweisen Ausprägung der Erfindung kann sich der Absorber wenigstens über eine Längserstreckung der ersten Durchführung der Spule erstrecken. Dies hat den Vorteil, dass eine Innenmantelfläche der Spule vollständig vom Absorber verdeckt oder bedeckt wird. Somit ist der Strahlpfad von der Antenne des Verbinders und des Gegenverbinders zur Spule vorzugsweise vollständig unterbrochen, sodass Reflexionen der elektromagnetischen Welle an der Spule weitestgehend nicht auftreten können.

In einer ebenfalls möglichen Ausprägung des Verbinders kann auch nur ein Teil der Innenmantelfläche der Spule vom Absorber verdeckt oder bedeckt sein. Insbesondere ist es vorteilhaft, wenn mehr als 50 %, bevorzugt mehr als 90 %, besonders bevorzugt mehr als 95 % der Innenmantelfläche der Spule vom Absorber verdeckt oder bedeckt sind. Somit kann zumindest ein Teil der Reflexionen einer elektromagnetischen Welle an der Spule verhindert werden.

In einer weiteren vorzugsweisen Ausprägung der Erfindung kann sich der Absorber in Längsrichtung bis zur Antenne erstrecken. Die Antenne kann vorzugsweise außerhalb der ersten Durchführung der Spule angeordnet sein. Dies hat den Vorteil, dass das von der Spule erzeugte Magnetfeld nicht oder nur geringfügig durch die Antenne und/oder eine optional zugehörige Elektronik verläuft. Somit wird die Induktion von Wirbelströmen in der Antenne und der zugehörigen Elektronik verhindert oder zumindest reduziert.

Bei einer von der Spule axial beabstandet angeordneten Antenne kann eine Längserstreckung des Absorbers bis zur Antenne verhindern, dass eine elektromagnetische Welle auf einen Körper auftrifft, welcher im Zwischenraum zwischen der Spule und der Antenne angeordnet ist. Somit wird diese nicht oder zumindest weniger stark reflektiert. Bei diesem Körper kann es sich vorzugsweise um einen zur Spule benachbart angeordneten Ferritkern handeln, der das von der Spule erzeugte Magnetfeld zumindest in einem Abschnitt der zugehörigen Magnetfeldlinien führt.

Der hülsenförmige Absorber kann als ein verlustbasierter und/oder als ein resonanzbasierter Absorber ausgeführt sein. Der verlustbasierte Absorber kann verlustverursachende Teilchen, wie beispielsweise Graphen, Kohlenstofffasern und/oder Metamaterialien umfassen, welche in ein Basismaterial, wie ein Elastomer, ein Schaumstoff, ein Thermoplast oder ein Duroplast, eingebettet sind. Die verlustverursachenden Teilchen dämpfen die in den Absorber eindringende elektromagnetische Welle.

Der resonanzbasierte Absorber unterdrückt Reflexionen an seiner äußeren Oberfläche, indem die auf ihn einfallende elektromagnetische Welle teils an seiner äußeren Oberfläche reflektiert wird und teils in den Absorber eindringt. Eine weitere, zweite Reflexion des in den Absorber eindringenden Anteils der elektromagnetischen Welle an der Grenzfläche zwischen Absorber und dem Material, auf welches der Absorber montiert ist, wird bedingt durch die Dicke des Absorbers um 180° in der Phase gegenüber der ersten Reflexion verzögert und kann sich folglich mit der ersten Reflexion an der äußeren Oberfläche des Absorbers destruktiv überlagern.

In einer vorteilhaften Weiterbildung der Erfindung kann der hülsenförmige Absorber mit verlustbasiertem Absorbermaterial ausgeführt sein.

In einer vorteilhaften Weiterbildung der Erfindung kann vorgesehen sein, dass der Absorber an dem luftschnittstellenseitigen axialen Ende und/oder an dem antennenseitigen axialen Ende der Spule jeweils einen flanschförmigen Bereich aufweist. Ein flanschförmiger Bereich des Absorbers kann somit ein axiales Ende der Spule verdecken bzw. abdecken. Im Fall eines insbesondere am antennenseitigen axialen Ende der Spule angeordneten Abschnitts des Ferritkerns kann der flanschförmige Bereich des Absorbers auch diesen Abschnitt des Ferritkerns zur Reduktion von Reflexionen axial verdecken bzw. abdecken. Bei einem flanschförmigen Bereich des Absorbers am luftschnittstellenseitigen axialen Ende der Spule können Reflexionen zwischen dem Verbinder und dem Gegenverbinder minimiert werden.

Der Absorber kann einteilig oder mehrteilig ausgebildet sein. In einer besonders vorzugsweisen Weiterbildung des Verbinders kann der flanschförmige Bereich des Absorbers getrenntteilig zum hülsenförmigen Bereich des Absorbers ausgebildet sein. Hierdurch lässt sich ein Absorber ohne flanschförmigen Bereich unter Gleichteilausnutzung kostengünstig zu einem Absorber mit flanschförmigen Bereichen ergänzen. Wenn der Absorber mehrteilig ausgebildet ist, ist jeweils eine kraft-, form- oder stoffschlüssige Verbindung zwischen den Teilstücken des Absorbers möglich. Die Teilstücke des Absorbers können durch einen Spalt getrennt sein. Die Dicke des Spaltes beträgt vorzugsweise maximal 0,5 mm.

Im flanschförmigen Bereich des Absorbers kann das Absorbermaterial vorzugsweise aus einem Material hergestellt sein, das ein Elastomer, beispielsweise ein Silikon, oder einen Schaumstoff umfasst. Das Elastomer und der Schaumstoff können jeweils wie obig erläutert ein Verbundwerkstoff sein. Dies ist insbesondere vorteilhaft, wenn der Außendurchmesser deutlich größer ist als die axiale Dicke des flanschförmigen Bereichs, beispielsweise um den Faktor 3, um den Faktor 5 oder um den Faktor 10. Im Spritzgussverfahren sind flache Körper nicht oder nur schwer herstellbar.

Besonders vorteilhaft kann es sein, wenn sich ein Durchmesser der zweiten Durchführung in Richtung zu einem luftschnittstellenseitigen axialen Ende des Absorbers lateral oder radial vergrößert. Das luftschnittstellenseitige axiale Ende des Absorbers ist relativ zur Antenne weiter entfernt als das antennenseitige axiale Ende des Absorbers. Die Vergrößerung des Innendurchmessers des Absorbers kann besonders vorteilhaft gestuft oder kegelförmig ausgebildet sein. Technische Untersuchungen der Erfinder haben gezeigt, dass hierdurch eine am Gegenverbinder reflektierte elektromagnetische Welle vorteilhaft gedämpft wird.

Der hülsenförmige Absorber, bei dem sich der Durchmesser der zweiten Durchführung in Richtung zum luftschnittstellenseitigen axialen Ende des Absorbers lateral oder radial vergrö-ßert, kann getrenntteilig aufgebaut sein. Zum Beispiel kann der Absorber antennenseitig eine erste Absorbereinheit umfassen, welche direkt an der Antenne montiert wird. Handelt es sich um eine auf einer Leiterplatte aufgebrachte Antenne, kann beispielsweise die erste Absorbereinheit mit einem Leiterplattenbestückungsprozess positionsgenau auf der Leiterplatte platziert und damit relativ zur Antenne genau ausgerichtet werden. Die erste Absorbereinheit umfasst dabei einen Teil der zweiten Durchführung des Absorbers, indem sie selbst über eine erste Durchgangsöffnung verfügt, innerhalb derer die Antenne liegt. Durch die genaue Ausrichtung kann eine Längsachse der ersten Durchgangsöffnung durch den Antennenmittelpunkt und/oder durch das Phasenzentrum der Antenne verlaufen.

Der Absorber kann darüber hinaus eine zweite Absorbereinheit umfassen, welche hülsenförmig ausgebildet sein kann und eine zweite Durchgangsöffnung als einen weiteren Teil der zweiten Durchführung umfasst. Der Innendurchmesser der zweiten Durchgangsöffnung kann dem Außendurchmesser der ersten Absorbereinheit entsprechen. Eine Längserstreckung der zweiten Absorbereinheit kann länger als eine Längserstreckung der ersten Absorbereinheit sein. Damit kann in einem Montagevorgang die zweite Absorbereinheit mittels einer Presspassung auf die erste Absorbereinheit aufgesteckt werden. Somit kann die zweite Absorbereinheit genau zur ersten Absorbereinheit ausgerichtet werden, sodass eine Längsachse der zweiten Durchgangsöffnung mit einer Längsachse der ersten Durchgangsöffnung fluchten kann. Insgesamt ergibt sich damit eine genaue Ausrichtung der Längsachse der zweiten Durchführung des Absorbers relativ zur Antenne.

Optional kann der Absorber eine dritte Absorbereinheit umfassen, die luftschnittstellenseitig den flanschförmigen Bereich des Absorbers bilden und getrenntteilig zur ersten und zweiten Absorbereinheit ausgebildet sein kann. Die dritte Absorbereinheit kann auf der luftschnittstellenseitigen Stirnfläche der Spule montiert sein. Die zweite Absorbereinheit kann sich von der Antenne bzw. von einer die Antenne tragenden Leiterplatte bis zur dritten Absorbereinheit in Längsrichtung erstrecken und somit form-, kraft- oder stoffschlüssig von der dritten Absorbereinheit gehalten werden. Damit kann ein Absorber geschaffen werden, der alle Komponenten des Verbinders zwischen der Antenne und dem luftschnittstellenseitigen axialen Ende der Spule verdeckt.

Wie bereits erwähnt kann der elektrische Verbinder zusätzlich einen Ferritkern aufweisen, der vorzugsweise entlang einer Außenmantelfläche der Spule und/oder einer am antennenseitigen axialen Ende ausgebildeten Stirnfläche der Spule verlaufen kann. Der Ferritkern ist hierbei vorzugsweise benachbart zur Spule angeordnet. Der Ferritkern kann vorzugsweise eine dritte Durchführung aufweisen, welche zur ersten Durchführung der Spule fluchten kann. Dabei kann sich der Absorber vorteilhaft zusätzlich wenigstens entlang der Längserstreckung der dritten Durchführung erstrecken, um Reflexionen einer elektromagnetischen Welle am Ferritkern zu verhindern.

In einer weiteren vorzugsweisen Ausprägung der Erfindung kann die Spule eingerichtet sein, in einem ersten Frequenzbereich induktiv Energie zu übertragen, während die Antenne eingerichtet sein kann, Daten in einem zum ersten Frequenzbereich verschiedenen, zweiten Frequenzbereich zu übertragen. Der Absorber kann eingerichtet sein, im ersten Frequenzbereich elektromagnetisch insbesondere für ein magnetisches Wechselfeld durchlässig zu sein und im zweiten Frequenzbereich elektromagnetisch insbesondere eine elektromagnetische Welle zu absorbieren. Hierdurch können Reflexionen der das Datensignal transportierenden elektromagnetischen Welle reduziert werden, ohne dass die induktive Übertragung von Energie zwischen Verbinder und Gegenverbinder gedämpft würde.

Elektromagnetisch durchlässig zu sein, bedeutet dabei, dass die Transmissionsdämpfung des Absorbers vorzugsweise weniger als 10 dB/cm, besonders vorzugsweise weniger als 5 dB/cm, beträgt. Elektromagnetisch zu absorbieren, bedeutet dabei, dass die Transmissionsdämpfung des Absorbers wie oben erwähnt parametriert ist.

Vorteilhafterweise liegt das obere Ende des ersten Frequenzbereichs unterhalb des unteren Endes des zweiten Frequenzbereichs. Beispielsweise kann der erste Frequenzbereich zwischen 0,5 kHz und 10 MHz liegen oder optional einen Teilbereich hierin einnehmen. Das obere Ende des ersten Frequenzbereichs kann alternativ beispielsweise auch maximal 100 MHz betragen. Bei dem ersten Frequenzbereich kann es sich auch nur um eine Schwingung einer bestimmten Frequenz zwischen 0,5 kHz und 100 MHz handeln. Beispielsweise kann der zweite Frequenzbereich zwischen 1 GHz und 500 GHz liegen oder einen Teilbereich hiervon einnehmen. Besonders bevorzugt kann der zweite Frequenzbereich zwischen 57 GHz und 64 GHz liegen. Das untere Ende des zweiten Frequenzbereichs kann alternativ beispielsweise 0,5 GHz oder 10 GHz betragen. Insbesondere kann es vorteilhaft sein, wenn das obere Ende des ersten Frequenzbereichs um mindestens den Faktor 10, den Faktor 100 oder den Faktor 1000 unterhalb des unteren Endes des zweiten Frequenzbereichs liegt. Damit lassen sich Materialien und/oder Geometrien finden, welche die Eigenschaft haben, im zweiten Frequenzbereich elektromagnetisch zu absorbieren und im ersten Frequenzbereich elektromagnetisch durchlässig zu sein.

In einer vorteilhaften Weiterbildung des elektrischen Verbinders kann die Antenne zirkular polarisiert ausgebildet sein und/oder kann die Hauptstrahlrichtung der Antenne mit einer Längsachse der zweiten Durchführung fluchten.

Rotiert der Verbinder relativ zum Gegenverbinder um eine Längsachse der zweiten Durchführung des Verbinders, so ermöglichen die zirkular polarisierten Antennen von Verbinder und Gegenverbinder eine vom Rotationswinkel unabhängige Datenübertragung.

Das bevorzugte Fluchten der Hauptstrahlrichtung mit der Längsachse der zweiten Durchführung hat folgende Vorteile:
Der Absorber umgibt ohne axialen Versatz zum Antennenmittelpunkt die von der Antenne abgestrahlte elektromagnetische Welle. Dies kann die zirkulare Polarisation der elektromagnetischen Welle in der Ausbreitung durch die zweite Durchführung erhalten und/oder die Sende-Empfang-Isolation der Antenne begünstigen.

In einer weiteren vorzugsweisen Ausprägung der Erfindung kann die zweite Durchführung rotationssymmetrisch ausgebildet sein. Dadurch kann die Sende-Empfang-Isolation der Antenne verbessert werden. Dies kann insbesondere bei einer für eine Inband-Vollduplexdatenübertragung eingerichteten Antenne vorteilhaft sein. Die Rotationssymmetrie der zweiten Durchführung kann außerdem die Übertragungsqualität bei einer Rotation des Verbinders relativ zum Gegenverbinder um die Längsachse der zweiten Durchführung des Verbinders verbessern.

In einer weiteren vorzugsweisen Ausprägung der Erfindung kann die Antenne des Verbinders und des Gegenverbinders eingerichtet sein, eine Inband-Vollduplexdatenübertragung durchzuführen. Dies bedeutet, dass die Antenne sowohl in Empfangs- als auch in Senderichtung in demselben Frequenzband gleichzeitig überträgt. Damit kann bei einer Inband-Vollduplexdatenübertragung die benötigte Bandbreite verglichen mit einem Frequenzduplex halbiert werden bzw. alternativ die Datenrate verdoppelt werden. Dabei kann vorzugsweise eine Mittenachse der Antenne zu einer Längsachse der zweiten Durchführung fluchten.

Eine Antenne, welche dazu eingerichtet ist, eine Inband-Vollduplexdatenübertragung durchzuführen, kann durch ihre Sende-Empfang-Isolation gekennzeichnet sein. Die Sende-Empfang-Isolation beschreibt die Isolation zwischen einem an die Antenne elektrisch angeschlossenen Sendesignalpfads des Verbinders und einem an die Antenne elektrisch angeschlossenen Empfangssignalpfad des Verbinders. Für eine Inband-Vollduplexdatenübertragung kann die Sende-Empfang-Isolation größer als 30 dB, besonders bevorzugt größer als 40 dB sein. Die Sende-Empfang-Isolation stellt den Kehrwert des Transmissionsstreuparamters vom Sendesignalpfad zum Empfangssignalpfad dar.

Für eine Antenne, welche dazu eingerichtet ist, eine Inband-Vollduplexdatenübertragung durchzuführen, gibt es verschiedene Ausführungsformen. Zum Beispiel kann die Antenne eine gemeinsame Sende-Empfang-Antenne umfassen, an der sowohl der Sendesignalpfad als auch der Empfangssignalpfad beispielsweise über einen Zirkulator elektrisch angeschlossen sind. Zusätzlich oder alternativ können einem Sendesignal und einem Empfangssignal des elektrischen Verbinders orthogonale Moden der Antenne zugeordnet sein.

Alternativ kann die Antenne mindestens eine Sendeantenne, an welche der Sendesignalpfad angeschlossen ist, und mindestens eine Empfangsantenne umfassen, an welche der vom Sendesignalpfad unabhängige Empfangssignalpfad angeschlossen ist. Dabei können die Sende- und die Empfangsantenne räumlich voneinander weit genug beabstandet sein, sodass die erforderliche Sende-Empfang-Isolation erreicht werden kann. Zusätzlich oder alternativ können die Sende- und die Empfangsantenne kreuzpolarisiert zueinander sein. Zusätzlich oder alternativ kann eine Entkopplungsstruktur, beispielsweise ein elektromagnetischer Absorber, eine Metaoberfläche oder eine Schirmwand, zwischen der mindestens einen Sendeantenne und der mindestens einen Empfangsantenne angeordnet sein. Eine weitere Möglichkeit zur Inband-Vollduplexdatenübertragung besteht darin, dass die Antenne mindestens zwei Sendeantennen und mindestens eine Empfangsantenne umfasst und sich das Übersprechen von den Sendeantennen in alle Empfangsantennen jeweils auslöscht.

Die Antenne kann eine Sendeantennengruppe mit einer ersten Sendeantenne, einer zweiten Sendeantenne und einem ersten Balun, und eine Empfangsantennengruppe mit einer ersten Empfangsantenne, einer zweiten Empfangsantenne und einem zweiten Balun umfassen, wobei die erste Sendeantenne und die zweite Sendeantenne jeweils an einem symmetrischen Anschluss des ersten Baluns und die erste Empfangsantenne und die zweite Empfangsantenne jeweils an einem symmetrischen Anschluss des zweiten Baluns angeschlossen sind, wobei ein asymmetrischer Anschluss des ersten Baluns mit einem Sendesignalpfad einer Transceiveranordnung des Verbinders und ein asymmetrischer Anschluss des zweiten Baluns mit einem von dem Sendesignalpfad unabhängigen Empfangssignalpfad der Transceiveranordnung verbunden ist, und wobei die erste Sendeantenne, die zweite Sendeantenne, die erste Empfangsantenne und die zweite Empfangsantenne eine relative räumliche Lage zueinander aufweisen, sodass ein Übersprechen zwischen der Sendeantennengruppe und der Empfangsantennengruppe durch die differenzielle Verschaltung deren jeweiliger Antennen zumindest reduziert wird, wobei jede der Empfangsantennen zu beiden Sendeantennen denselben Mitte-zu-Mitte-Abstand aufweist.

In einer vorzugsweisen Ausprägung der Erfindung weist die Antenne ein Paar von planaren Sendeantennen und ein Paar von planaren Empfangsantennen auf, welche jeweils überkreuzt vorzugsweise rechtwinklig zueinander auf einer Leiterplatte angeordnet sein können. Dabei kann eine Mittenachse, welche durch einen Mittelpunkt der beiden Paare verläuft und senkrecht zur Leiterplatte orientiert ist, zu einer Längsachse der zweiten Durchführung fluchten. Dabei kann das Paar aus Sende- und Empfangsantennen jeweils vorzugsweise überkreuzt auf einer Kreislinie angeordnet sein. Die Sendeantennen können von einem differentiellen Sendesignal angesteuert sein. Dadurch können sich die Signale der Sendeantennen an den Empfangsantennen jeweils destruktiv überlagern, sodass die Sende-Empfang-Isolation der Antenne verbessert werden kann.

Gemäß einer vorteilhaften Weiterbildung der Erfindung kann wenigstens ein Bereich des Absorbers aus einem Material hergestellt sein, das ein thermoplastisches oder ein duroplastisches Material umfasst, und unmittelbar, insbesondere bevorzugt mittels einer Presspassung, an der Antenne fixiert sein.

In einer vorzugsweisen Ausprägung des Absorbers ist der Absorber vollständig aus einem thermoplastischen oder duroplastischen Material oder Verbundwerkstoff hergestellt. Damit kann eine ausreichende mechanische Festigkeit zur Befestigung des Absorbers an der Antenne oder an der Leiterplatte, an der die Antenne ausgebildet ist, erreicht werden.

In einer weiteren vorzugsweisen Ausprägung kann der Absorber eine Schichtung aus einer Innenhülse und einer Außenhülse umfassen. Dabei kann die Innenhülse aus einem Material hergestellt sein, welches ein elastomerisches oder ein schaumstoffartiges Absorbermaterial umfasst, während die Außenhülse ein thermoplastisches oder duroplastisches Absorbermaterial aufweisen kann. Alternativ zu der Außenhülse kann der Absorber an einem vorzugsweise hülsenförmig ausgebildeten Halteelement aus vorzugsweise einem dielektrischen Vollmaterial befestigt sein. Allgemein kann das Halteelement ein steifes Material umfassen wie beispielsweise einen Kunststoff, einen Naturstoff oder ein Verbundmaterial. Die Befestigung des Absorbers aus einem Elastomer- oder aus einem Schaumstoffmaterial am Halteelement kann beispielsweise mittels Kleben erfolgen, beispielsweise über eine druckempfindliche, doppeltseitige Klebefolie und/oder über einen Epoxidklebstoff. Die Befestigung des Absorbers an der Antenne kann vorzugsweise mittels einer Presspassung oder mittels Kleben erfolgen.

Durch die Befestigung des Absorbers oder des Halteelements unmittelbar an der Antenne kann die Fertigungstoleranzkette minimiert und somit ein lateraler oder radialer Versatz zwischen dem Absorber und der Antenne vorteilhaft reduziert oder vermieden werden. Dies kann eine verbesserte Sende-Empfang-Isolation der Antenne begünstigen. Außerdem kann damit eine verbesserte Koaxialität der Hauptstrahlrichtung der Antenne und der Längsachse der zweiten Durchführung des Absorbers erzielt werden.

Eine optionale Weiterbildung der Erfindung umfasst eine integrierte Senderschaltung sowie eine integrierte Empfängerschaltung. Diese können beispielsweise auf einer gemeinsamen Leiterplatte mit der Antenne angeordnet und mit dieser elektrisch verbunden sein. Die integrierte Senderschaltung umfasst dabei zumindest einen Hochfrequenzmischer und einen Oszillator zur Erzeugung einer Trägerschwingung. Bei dem Oszillator kann es sich optional um einen freilaufenden Oszillator handeln. Somit kann auf eine Regelung der Trägerfrequenz über einen Phasenregelkreis verzichtet werden, was Strom sparen kann. Die Senderschaltung kann optional außerdem dazu ausgebildet sein, eine Amplitudenmodulation durchzuführen. Die Empfängerschaltung kann optional einen inkohärenten Demodulator, beispielsweise einen Hüllkurvendetektor, umfassen, um das Datensignal aus der empfangenen Trägerschwingung zu demodulieren. So kann in der Empfängerschaltung auf die Erzeugung eines Oszillatorsignals verzichtet werden und damit Strom gespart werden. Damit kann die Effizienz der Energieübertragung verbessert werden.

Die Erfindung betrifft auch ein System aus einem elektrischen Verbinder und einem zugehörigen elektrischen Gegenverbinder. Für den Verbinder und den Gegenverbinder gelten die obig zum Verbinder im Detail erläuterten technischen Merkmale, technischen Ausprägungen und technischen Aspekte äquivalent. Dabei ist eine Luftschnittstelle des Verbinders einer Luftschnittstelle des Gegenverbinders gegenüberliegend angeordnet. Wenigstens der Verbinder und/oder der Gegenverbinder sind/ist jeweils um eine Längsachse der jeweiligen zweiten Durchführung rotierbar ausgebildet. Fluchten die Längsachsen der zweiten Durchführung des Verbinders und des Gegenverbinders, so können die beiden Verbinder relativ zueinander vorzugsweise um die beiden fluchtenden Längsachsen gedreht werden. Die Drehbewegung kann dabei in einem definierten Winkelsegment oder um einen Vollwinkel von 0° bis 360° erfolgen.

Zwischen den Luftschnittstellen der beiden Verbinder kann ein Luftspalt mit einer Dicke von vorzugsweise zwischen 0 cm und 20 cm, insbesondere zwischen 0 cm und 5 cm, besonders bevorzugt zwischen 0,05 cm und 1 cm vorliegen. Prinzipiell ist der Abstand zwischen den beiden Verbindern variierbar, vorzugsweise innerhalb der genannten Abstände.

In einer Weiterbildung des erfindungsgemäßen Systems können die Achsen der beiden Verbinder relativ zueinander verkippt sein. In diesem Fall liegen die Luftschnittstellen der beiden Verbinder in einer schiefen Ebene gegenüber. Dies kann bevorzugt in einem Winkelbereich von -10° bis +10° geschehen. Dies kann erreicht werden, indem die Strahlkeule der Antenne aufgeweitet wird.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine Längsschnittdarstellung einer ersten Ausführungsform eines erfindungsgemäßen elektrischen Verbinders mit einem elektromagnetischen Absorber,
- Fig. 2: eine Längsschnittdarstellung einer zweiten Ausführungsform eines erfindungsgemäßen Verbinders,
- Fig. 3: eine Darstellung einer Anbindung des Absorbers an den erfindungsgemäßen Verbinder,
- Fig. 4: eine Längsschnittdarstellung einer dritten Ausführungsform eines erfindungsgemäßen Verbinders,
- Fig. 5: eine Längsschnittdarstellung einer vierten Ausführungsform eines erfindungsgemäßen Verbinders,
- Fig. 6: eine Längsschnittdarstellung einer fünften Ausführungsform eines erfindungsgemäßen Verbinders,
- Fig. 7: eine Längsschnittdarstellung einer sechsten Ausführungsform eines erfindungsgemäßen Verbinders,
- Fig. 8: eine Längsschnittdarstellung einer siebten Ausführungsform eines erfindungsgemäßen Verbinders,
- Fig. 9: eine Längsschnittdarstellung einer achten Ausführungsform eines erfindungsgemäßen Verbinders und
- Fig. 10: eine Längsschnittdarstellung eines Systems aus zwei erfindungsgemäßen elektrischen Verbindern.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

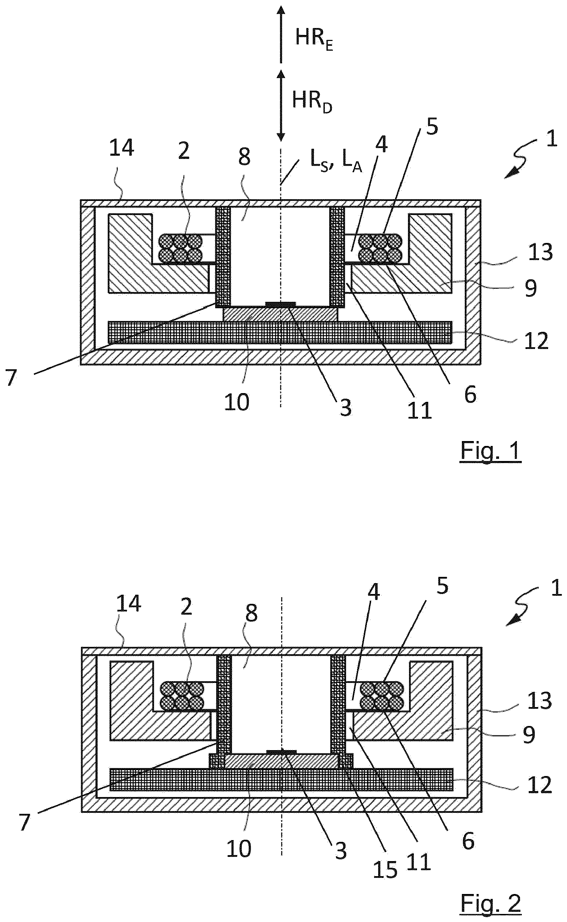

Der erfindungsgemäße elektrischer Verbinder 1 zur kontaktlosen Daten- und Energieübertragung weist gemäß Fig. 1 eine Spule 2 zur kontaktlosen Energieübertragung und eine Antenne 3 zur kontaktlosen Datenübertragung auf. Die Spule 2 ist vorzugsweise als Zylinderspule ausgebildet und weist eine Längsachse L_{S} auf. Die Antenne 3 ist vorzugsweise als Flachantenne ausgebildet.

Die Spule 2 weist eine erste Durchführung 4 zwischen einem luftschnittstellenseitigen axialen Ende 5 und einem antennenseitigen axialen Ende 6 auf. In der ersten Durchführung 4 der Spule 2 ist ein elektromagnetischer Absorber 7 angeordnet, der vorzugsweise hohlzylindrisch ausgebildet ist und eine zweite Durchführung 8 aufweist. Eine Längsachse L_{A} des Absorbers 7 fluchtet vorzugsweise zur Längsachse L_{S} der ersten Durchführung 4 der Spule 2.

Zur Erhöhung der Induktivität der Spule 2 und damit zur Erhöhung der Reichweite der kontaktlosen Energieübertragung ist der von der Spule 2 erzeugte magnetische Fluss teilweise in einem Ferritkern 9 geführt. Der Ferritkern 9 erstreckt sich nur abschnittsweise um die Spule 2 und ist vorzugsweise benachbart zur Spule 2 einzig radial außerhalb der Spule 2 und einzig in einem Bereich am antennenseitigen axialen Ende 6 der Spule 2 ausgebildet.

Die Antenne 3 ist auf einer Leiterplatte 10 ausgebildet. Die Leiterplatte 10 kann zusätzliche Elektronik-Einheiten und Hochfrequenz-Komponenten tragen, die für eine kontaktlose Datenübertragung erforderlich sind, beispielsweise Sender- und Empfänger-Schaltungen, Hochfrequenzkoppler usw. Um in der Antenne 3 und in den Elektronik-Schaltungen auf der Leiterplatte 10 keine unerwünschten Wirbelströme zu erzeugen, ist die Leiterplatte 10 und die darauf ausgebildete Antenne 3 wenigstens um die Bodenwandstärke des Ferritkerns 9 vom antennenseitigen axialen Ende 6 der Spule 2 beabstandet angeordnet.

Die Antenne 3 ist zusätzlich symmetrisch zur Längsachse L_{A} der zweiten Durchführung 8 angeordnet. Beispielweise kann die Längsachse L_{A} der zweiten Durchführung 8 orthogonal zur Antenne 3, sofern diese als Flachantenne ausgeführt ist, orientiert sein und/oder durch das Phasenzentrum der Antenne 3 verlaufen. Sofern die Antenne 3 optional eine oder mehrere Sendeantennen und eine oder mehrere von dem/den Senderantennen getrennte Empfangsantennen umfasst, kann die Längsachse L_{A} durch einen gemeinsamen Mittelpunkt der Sende- und Empfangsantennen verlaufen. Die Längsachse L_{A} der zweiten Durchführung 8 kann optional mit einer Längsachse des Absorbers 7 übereinstimmen. Die zweite Durchführung 8 kann außerdem rotationssymmetrisch zu ihrer Längsachse L_{A} ausgeführt sein.

Die Antenne 3 strahlt somit eine elektromagnetische Welle ab, welche sich durch die zweite Durchführung 8 ausbreitet. Analog empfängt die Antenne 3 eine von einer Antenne des Gegenverbinders 1' abgestrahlte elektromagnetische Welle durch die zweite Durchführung 8. Somit liegt die Hauptstrahlrichtung HR_{D} einer bidirektionalen kontaktlosen Datenübertragung zwischen dem Verbinder 1 und dem zugehörigen Gegenverbinder 1' vorzugsweise auf der Längsachse L_{A} der zweiten Durchführung 8. Die Hauptübertragungsrichtung HR_{E} der vorzugsweisen unidirektionalen kontaktlosen Energieübertragung vom Verbinder 1 zum zugehörigen Gegenverbinder 1' liegt vorzugsweise auf der Längsachse L_{S} der ersten Durchführung 4.

Der Absorber 7 erstreckt sich wenigstens über die Längserstreckung der ersten Durchführung 4 der Spule 2, um wenigstens die Innenmantelfläche der Spule 2 zumindest teilweise, vorzugsweise im Wesentlich, insbesondere vollständig, zu verdecken. Anteile einer von der Antenne 3 abgestrahlten oder empfangenen elektromagnetischen Welle, welche aufgrund der Richtcharakteristik der Antenne 3 außerhalb der Hauptstrahlrichtung HR_{D} liegen, treffen auf den Absorber 7 auf, werden von diesem absorbiert, und gelangen somit nicht oder zumindest gedämpft zur Spule 2, sodass Reflexionen an der Spule 2 unterbunden oder zumindest verringert werden.

In der ersten Ausführungsform eines erfindungsgemäßen Verbinders 1 gemäß Fig. 1 erstreckt sich der Absorber 7 von der ersten Durchführung 4 der Spule 2 darüber hinaus durch eine dritte Durchführung 11 des Ferritkerns 9 bis zur Antenne 3 bzw. bis zur die Antenne 3 tragenden Leiterplatte 10. Eine derartige Verlängerung des Absorbers 7 absorbiert Anteile einer elektromagnetischen Welle, die sich außerhalb der Hauptstrahlrichtung HR_{D} auf einen axialen Abschnitt zwischen dem antennenseitigen axialen Ende 6 der Spule 2 und der Antenne 3 bzw. der Leiterplatte 10 ausbreiten. Somit werden diese Anteile nicht von einem in diesem axialen Abschnitt angeordneten Körper, insbesondere dem Ferritkern 9, reflektiert. Schließlich kann der Absorber 7 wie in Fig. 1 dargestellt auch jenseits des luftschnittstellenseitigen axialen Endes 5 der Spule 2 verlängert sein, um dadurch zusätzlich die Richtcharakteristik der elektromagnetischen Welle einzuengen. Optional kann sich der Absorber 7 und damit seine zweite Durchführung 8 von der Antenne 3 bis zu einem Deckel 14 des Verbinders 1 erstrecken.

Der Absorber 7 kann in dem in Fig. 1 dargestellten Ausführungsbeispiel stoffschlüssig, vorzugsweise mittels Klebung an der Leiterplatte 10 fixiert sein. Der Absorber 7 ist von der Spule 2 vorzugsweise durch einen geringen Luftspalt beabstandet.

Zur weiteren mechanischen Stabilisierung und/oder zum Anschluss von Signalen ist die Leiterplatte 10 auf einem Befestigungsträger 12 fixiert, welcher eine weitere Leiterplatte und zusätzliche Elektronik-Komponenten umfassen kann. Der Verbinder 1 ist in einem Gehäuse 13 eingebaut, welches mit dem Gehäuse 13' des zugehörigen Gegenverbinders 1' verbindbar sein kann. Das Gehäuse 13 ist luftschnittstellenseitig mit einem Deckel 14 abgeschlossen, der aus einem elektrisch nichtleitenden Material, vorzugsweise aus einem Kunststoff, hergestellt ist, um für eine elektromagnetische Welle durchlässig zu sein. Dazu kann optional eine Dicke des Deckels eine halbe Wellenlänge der von der Antenne 3 abgestrahlten und/oder empfangenen elektromagnetischen Welle im Material des Deckels betragen.

Im zweiten Ausführungsbeispiel eines erfindungsgemäßen elektrischen Verbinders 1 gemäß Fig. 2 ist der Absorber 7 unmittelbar mit der Leiterplatte 10 verbunden, insbesondere kraftschlüssig.

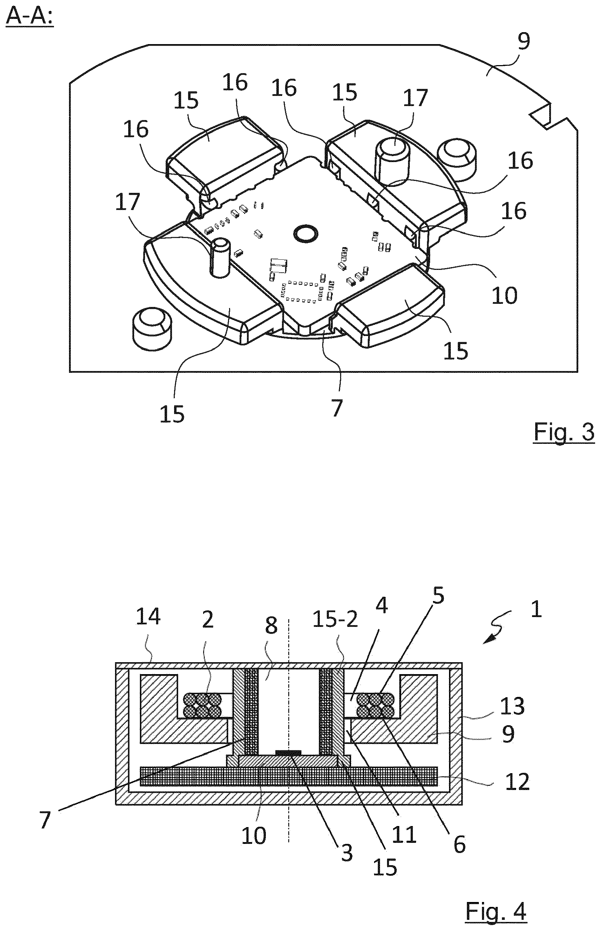

Gemäß Fig. 3 sind hierzu am Absorber 7 vorzugsweise vier axiale Erweiterungen 15 ausgebildet, die die vorzugsweise quaderförmige Leiterplatte 10 an jeweils einer Seitenkante umfassen. An den axialen Erweiterungen 15 des Absorbers 7 ist jeweils wenigstens ein Vorsprung 16 ausgebildet, der die Leiterplatte 10 an ihren Außenkanten kraftschlüssig umgreift (Presspassung). Alternativ ist auch eine formschlüssige oder eine sonstige (unmittelbare) Verbindung möglich. Damit kann der Absorber 7 direkt an der Antenne 3 bzw. an der die Antenne 3 tragenden Leiterplatte 10 ausgerichtet werden. Dies ermöglicht eine genauere Positionierung der Antenne 3 zur zweiten Durchführung 8.

An wenigstens einer axialen Erweiterungen 15 des Absorbers 7 kann optional jeweils eine vorzugsweise stiftförmige Erweiterung 17 ausgebildet sein, die jeweils in eine zugehörige Bohrung des Befestigungsträgers 12 mit einer Spielpassung einführbar ist, was die Montage des Absorbers 7 an der Leiterplatte 10 erleichtern kann. Aufgrund der Spielpassung im Befestigungsträger 12 und der Vorsprünge 16, welche die Leiterplatte 10 kraftschlüssig umgreifen, wird der Absorber 7 relativ zur Leiterplatte 10 und nicht relativ zum Befestigungsträger 12 ausgerichtet, so dass ein möglicher, fertigungsbedingter seitlicher Versatz zwischen der Leiterplatte 10 und dem Befestigungsträger 12 nicht in die Positionierungstoleranz des Absorbers 7 bzw. dessen zweiter Durchführung 8 relativ zur Antenne 3 eingeht. Optional kann die Leiterplatte 10 auf den Befestigungsträger 12 gelötet sein.

Aus Fig. 4 geht eine dritte Ausführungsform eines erfindungsgemäßen Verbinders 1 mit einem hülsenförmigen Absorber 7 aus einem Material hervor, das einen Schaumstoff oder ein Elastomer umfasst. Zur stabilen mechanischen Befestigung eines derartigen Absorbers 7 an der Leiterplatte 10 ist der Absorber 7 vorzugsweise an seiner Außenmantelfläche an ein vorzugsweise hülsenförmiges Halteelement 15-2 befestigt. Das hülsenförmige Halteelement 15-2 ist aus einem Material hergestellt, das vorzugsweise ein thermoplastisches oder duroplastisches Vollmaterial umfasst. Zur Befestigung des Halteelements 15-2 an der Leiterplatte 10 und/oder an dem Befestigungsträger 12 kann das Halteelement 15-2 äquivalent wie der Absorber 7 in der zweiten Ausführungsform eines erfindungsgemäßen Verbinders 1 gemäß der Figuren 2 und 3 geformt sein.

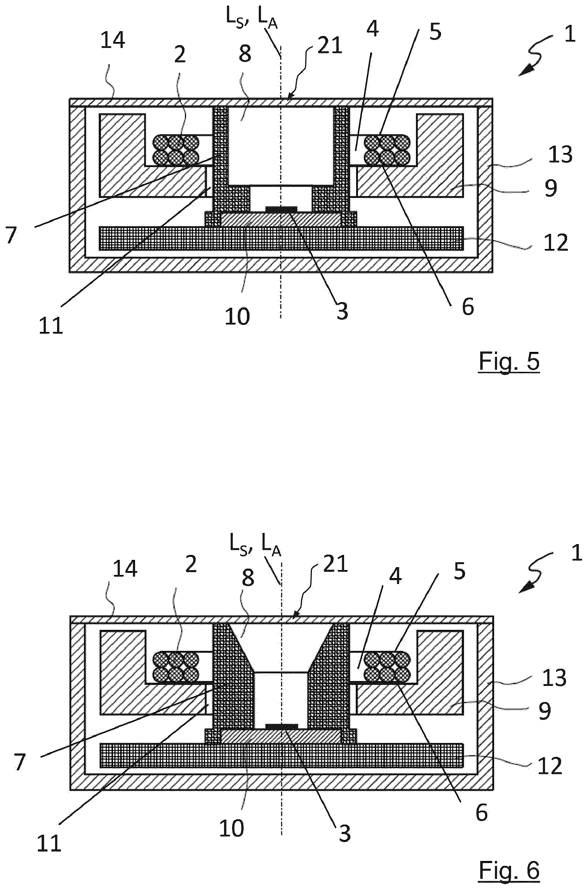

In der vierten Ausführungsform eines erfindungsgemäßen Verbinders 1 gemäß Fig. 5 ist ein Absorber 7 dargestellt, dessen Innendurchmesser sich gestuft in Richtung der Luftschnittstelle 21 vergrößert. Damit kann ein vom Gegenverbinder 1' auf die Leiterplatte 10 oder allgemein neben die Antenne 3 einfallender Anteil einer elektromagnetischen Welle besser mittels des Absorbers 7 bedämpft werden. Außerdem kann eine Oberflächenwelle, welche von der Antenne 3 ausgeht, stärker durch die antennenseitige Verjüngung des Absorbers 7 vorteilhaft bedämpft werden.

Optional kann die gestuft ausgeführte zweite Durchführung 8 beispielsweise mindestens zwei Hohlzylinder umfassen. Die Hohlzylinder können koaxial zur Längsachse L_{A} der zweiten Durchführung 8 angeordnet sein. Optional können diese Hohlzylinder mit einem Radommaterial ganz oder teilweise gefüllt sein.

In der fünften Ausführungsform eines erfindungsgemäßen elektrischen Verbinders 1 gemäß Fig. 6 vergrößert sich der Innendurchmesser des Absorbers 7 alternativ konisch in Richtung der Luftschnittstelle 21, d. h. bis zum Deckel 14.

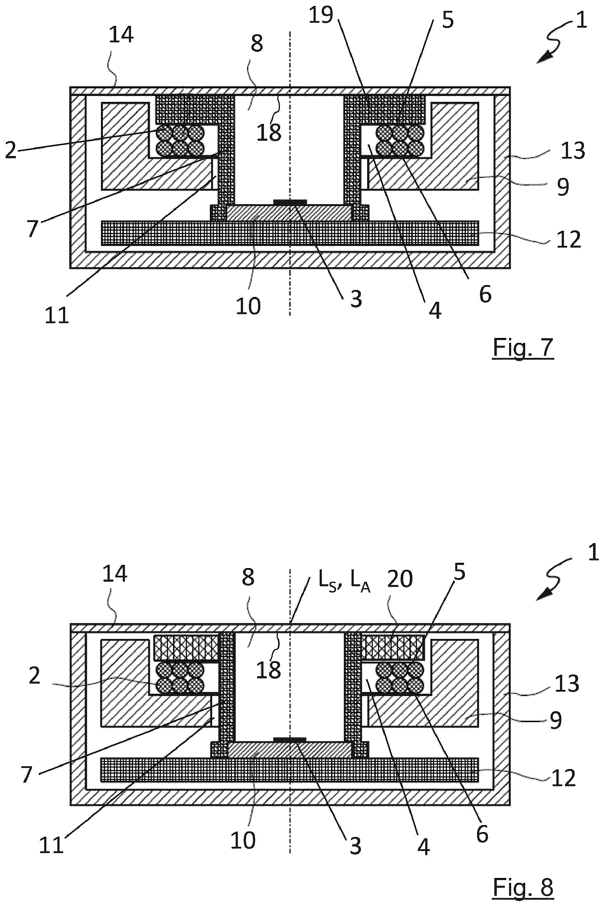

In einer sechsten Ausführungsform eines erfindungsgemäßen elektrischen Verbinders 1 gemäß Fig. 7 ist am luftschnittstellenseitigen axialen Ende 18 des Absorbers 7 ein flanschförmiger Bereich 19 ausgebildet, der das luftschnittstellenseitige axiale Ende 5 der Spule 2 verdeckt und somit Reflexionen einer elektromagnetischen Welle dort reduziert.

Wie in Fig. 8 dargestellt erfolgt die Verdeckung des luftschnittstellenseitigen axialen Endes 5 der Spule 2 in einer siebten Ausführungsform eines erfindungsgemäßen Verbinders 1 durch ein zusätzliches hülsenförmiges elektromagnetisches Absorber-Element 20, das das luftschnittstellenseitige axiale Ende 5 der Spule 2 verdeckt. Das Absorber-Element 20, welches einen flanschförmigen Bereich 19 des Absorbers 7 bildet, ist somit getrenntteilig zum Absorber 7 ausgebildet und kann optional ein anderes Absorbermaterial, zum Beispiel ein Elastomer und/oder einen Schaumstoff, als der übrige Absorber 7 umfassen. Das zusätzliche Absorber-Element 20 kann direkt an den übrigen Absorber 7 angrenzen, was den Funkkanal zwischen dem Verbinder 1 und dem Gegenverbinder 1' verbessern kann.

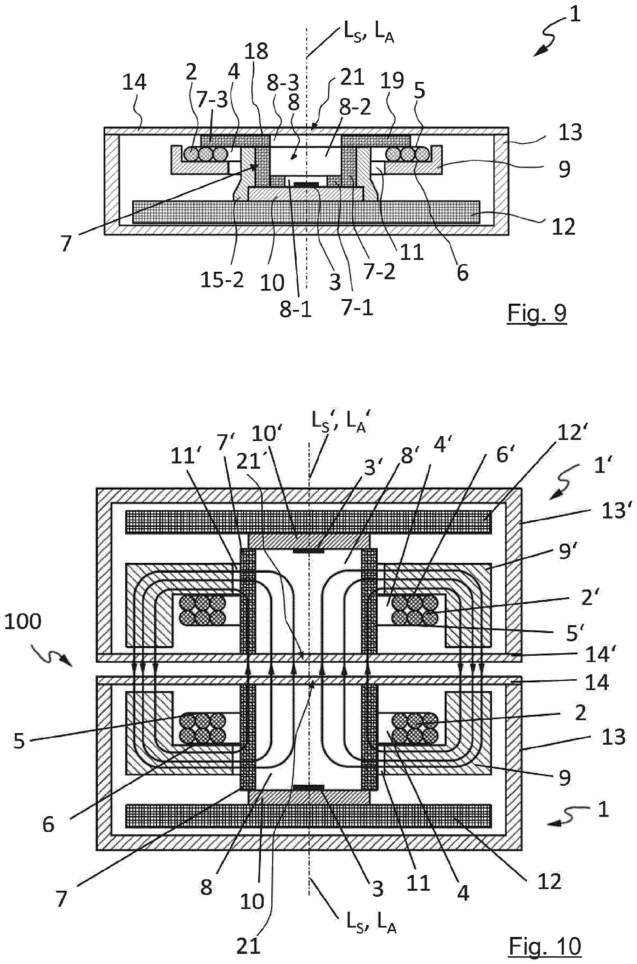

Fig. 9 zeigt einen erfindungsgemäßen Verbinder 1, bei welchem der hülsenförmige Absorber 7 getrenntteilig und beispielsweise dreiteilig ausgebildet ist. Der Absorber 7 umfasst eine erste Absorbereinheit 7-1, welche direkt auf der Leiterplatte 10 montiert ist. Die erste Absorbereinheit 7-1 weist eine erste Durchgangsöffnung 8-1 auf, die einen Teil der zweiten Durchführung 8 des Absorbers 7 bildet und die beispielsweise einen kreisförmigen Querschnitt ausweisen kann. Die Längsachse der ersten Durchgangsöffnung 8-1 verläuft durch den Mittelpunkt und/oder das Phasenzentrum der Antenne 3. Außerdem umfasst der Absorber 7 eine zweite Absorbereinheit 7-2. Die zweite Absorbereinheit 7-2 weist eine zweite Durchgangsöffnung 8-2 auf, deren Innendurchmesser gleich oder annähernd gleich dem Außendurchmesser der ersten Absorbereinheit 7-1 sein kann. Somit kann die zweite Absorbereinheit 7-2 eine Passung, beispielsweise eine Presspassung, mit der ersten Absorbereinheit 7-1 eingehen. Die zweite Absorbereinheit 7-2 weist ausgehend von Leiterplatte 10 eine größere Längserstreckung als die erste Absorbereinheit 7-1 auf. Die zweite Durchgangsöffnung 8-2 kann somit auch zumindest einen Teil der zweiten Durchführung 8 bilden. Eine Längsachse der zweiten Durchgangsöffnung 8-2 kann mit einer Längsachse der ersten Durchgangsöffnung 8-1 fluchten. Mit den so ausgeführten ersten und zweiten Absorbereinheiten 7-1, 7-2 kann sich folglich der Durchmesser der zweiten Durchführung 8 zur Luftschnittstelle 21 vergrößern. Die zweite Absorbereinheit 7-2 ist außenmantelseitig mit einem Halteelement 15-2 verbunden.

Optional kann der Absorber 7 eine dritte Absorbereinheit 7-3 umfassen, welche einen flanschförmigen Bereich 19 am luftschnittstellenseitigen axialen Ende 18 des Absorbers 7 bilden kann. Die dritte Absorbereinheit 7-3 weist eine dritte Durchgangsöffnung 8-3 auf, welche einen Teil der zweiten Durchführung 8 bildet. Ein Innendurchmesser der dritten Durchgangsöffnung 8-3 kann gleich oder annährend gleich einem Innendurchmesser der zweiten Durchgangsöffnung 8-2 sein. Die zweite Absorbereinheit 7-2 erstreckt sich in Längsrichtung bis an die dritte Absorbereinheit 7-3.

Wenigstens eine Absorbereinheit der ersten, zweiten oder der dritten Absorbereinheit 7-1, 7-2, 7-3 kann ein Absorbermaterial auf Elastomerbasis und/oder Schaumstoffbasis umfassen. Weiter optional kann die erste Absorbereinheit 7-1 ein resonanzbasiertes Absorbermaterial und die zweite und/oder die dritte Absorbereinheit 7-2, 7-3 ein verlustbasiertes Absorbermaterial umfassen.

Die Fig. 10 zeigt ein System 100 aus einem Verbinder 1 und einem zugehörigen Gegenverbinder 1', der baugleich wie der Verbinder 1 realisiert sein kann. In Bezug auf die Sender- und Empfängerleistungselektronik, welche der Energieübertragung dienen, können sich der Verbinder 1 und der Gegenverbinder 1' jedoch unterscheiden und zum Beispiel nur im Verbinder 1 eine Sendeelektronik und im Gegenverbinder 1' nur eine Empfängerelektronik für die Energieübertragung vorgesehen sein. Die Längsachse L_{A} der zweiten Durchführung 8 und die Längsachse L_{S} der ersten Durchführung 4 des ersten Verbinders 1 fluchtet zur Längsachse L_{A}' der zweiten Durchführung 8' und zur Längsachse L_{S}' der ersten Durchführung 4' des Gegenverbinders 1'. Der Luftschnittstelle 21 des ersten Verbinders 1 ist die Luftschnittstelle 21' des Gegenverbinders 1' vorzugsweise beabstandet gegenüber angeordnet. Allgemein ist jedoch auch eine Berührung der beiden Deckel 14 und 14' möglich, beispielsweise wenn der Verbinder und Gegenverbinder eine galvanische, aber nicht gänzlich kontaktlose Trennung einer kombinierten Energie- und Datenübertragung bereitstellen sollen. Wenigstens der Verbinder 1 oder der Gegenverbinder 1' ist um eine Rotationsachse rotierbar, welche jeweils auf der Längsachse L_{A} der zweiten Durchführung 8 und/oder der Längsachse L_{S} der ersten Durchführung 4 des Verbinders 1 bzw. auf der Längsachse L_{A}' der zweiten Durchführung 8' und/oder der Längsachse L_{S}' der ersten Durchführung 4' des zweiten Gegenverbinders 1' liegt.

Der Gegenverbinder 1' weist in Analogie zum Verbinder 1 eine vorzugsweise hülsenförmige Spule 2' zur kontaktlosen Energieübertragung auf, deren erste Durchführung 4' sich von einem antennenseitigen axialen Ende 6' bis zu einem luftschnittstellenseitigen axialen Ende 5' der Spule 2' erstreckt. In der ersten Durchführung 4' ist ein vorzugsweise hülsenförmiger Absorber 7' angeordnet, der sich bis zu einer Leiterplatte 10' erstreckt. Auf der Leiterplatte 10' ist eine Antenne 3' zur kontaktlosen Datenübertragung vorzugsweise symmetrisch zur Längsachse L_{A}' der zweiten Durchführung 8' angeordnet. Zur Erhöhung der Reichweite zwischen dem Verbinder 1 und dem Gegenverbinder 1' ist der magnetische Fluss der Spule 2' in einem Ferritkern 9' teilweise geführt, der benachbart zur Spule 2' vorzugsweise einzig radial außerhalb der Spule 2' und einzig am antennenseitigen axialen Ende 6' der Spule 2' ausgebildet ist. Der Absorber 7' ist durch eine dritte Durchführung 11' des Ferritkerns 9' hindurchgeführt. Die Antenne 3' des Gegenverbinders 1' strahlt und/oder empfängt eine elektromagnetische Welle durch die zweite Durchführung 8' des Absorbers 7'. Die Leiterplatte 10' mit der Antenne 3' ist an einem Befestigungsträger 12' fixiert. Der Gegenverbinder 1' ist in einem Gehäuse 13' eingebaut, das an der Luftschnittstelle 21' durch einen Deckel 14' abgeschlossen ist.

## Patentansprüche

1. Elektrischer Verbinder (1) aufweisend
eine Antenne (3) zur kontaktlosen Datenübertragung,
eine hülsenförmige Spule (2) zur kontaktlosen Energieübertragung aufweisend eine erste Durchführung (4) zwischen einem luftschnittstellenseitigen axialen Ende (5) der Spule (2) und einem antennenseitigen axialen Ende (6) der Spule (2) und einen hülsenförmigen elektromagnetischen Absorber (7) aufweisend eine zweite Durchführung (8), welche für eine elektromagnetische Welle ausbreitbar ausgebildet ist,
wobei der Absorber (7) innerhalb der ersten Durchführung (4) angeordnet ist und die Antenne (3) derart relativ zu dem antennenseitigen axialen Ende (6) angeordnet ist, dass eine Hauptstrahlrichtung HR_{D} der Antenne (3) durch die zweite Durchführung (8) verläuft.

2. Elektrischer Verbinder (1) gemäß Anspruch 1,
**dadurch gekennzeichnet,**
**dass** sich der Absorber (7) wenigstens über eine Längserstreckung der ersten Durchführung (4) erstreckt.

3. Elektrischer Verbinder (1) gemäß Anspruch 1 oder 2,
**dadurch gekennzeichnet,**
**dass** sich der Absorber (7) in Längsrichtung bis zur Antenne (3) erstreckt.

4. Elektrischer Verbinder (1) gemäß einem der vorhergehenden Ansprüche,
**dadurch gekennzeichnet,**
**dass** der Absorber (7) aus einem Material hergestellt ist, das ein Elastomer oder einen Schaumstoff umfasst, wobei der Absorber (7) vorzugsweise außenmantelseitig mit einem Halteelement (15-2) aus einem Material verbunden ist, das vorzugsweise ein thermoplastisches oder ein duroplastisches Absorbermaterial umfasst.

5. Elektrischer Verbinder (1) gemäß einem der vorhergehenden Ansprüche,
**dadurch gekennzeichnet,**
**dass** der Absorber (7) an dem luftschnittstellenseitigen axialen Ende (5) und/oder an dem antennenseitigen axialen Ende (6) der Spule (2) jeweils einen flanschförmigen Bereich (19) aufweist.

6. Elektrischer Verbinder (1) gemäß Anspruch 5,
**dadurch gekennzeichnet,**
**dass** der flanschförmige Bereich (19) des Absorbers (7) getrenntteilig zum hülsenförmigen Absorber (7) ausgebildet ist.

7. Elektrischer Verbinder (1) gemäß Anspruch 5 oder 6,
**dadurch gekennzeichnet,**
**dass** der flanschförmige Bereich (19) des Absorbers (7) aus einem Material hergestellt ist, das ein Elastomer oder einen Schaumstoff umfasst.

8. Elektrischer Verbinder (1) gemäß einem der vorhergehenden Ansprüche,
**dadurch gekennzeichnet,**
**dass** sich ein Durchmesser der zweiten Durchführung (8) in Richtung zu einem luftschnittstellenseitigen axialen Ende des Absorbers (7) lateral oder radial vergrößert.

9. Elektrischer Verbinder (1) gemäß einem der vorhergehenden Ansprüche,
**dadurch gekennzeichnet,**
**dass** der elektrische Verbinder (1) zusätzlich einen Ferritkern (9) aufweist, der vorzugsweise entlang einer Außenmantelfläche der Spule (2) und einer am antennenseitigen axialen Ende (6) ausgebildeten Stirnfläche der Spule (2) verläuft, wobei der Ferritkern (9) eine dritte Durchführung (11) aufweist, die zur ersten Durchführung (4) der Spule (2) fluchtet, wobei sich der Absorber (7) wenigstens entlang der Längserstreckung der dritten Durchführung (11) erstreckt.

10. Elektrischer Verbinder (1) gemäß einem der vorhergehenden Ansprüche,
**dadurch gekennzeichnet,**
**dass** die Spule (2) eingerichtet ist, um in einem ersten Frequenzbereich induktiv Energie zu übertragen, wobei die Antenne (3) eingerichtet ist, in einem zum ersten Frequenzbereich verschiedenen, zweiten Frequenzbereich Daten zu übertragen, wobei der Absorber (7) eingerichtet ist, im ersten Frequenzbereich elektromagnetisch durchlässig zu sein und im zweiten Frequenzbereich elektromagnetisch zu absorbieren.

11. Elektrischer Verbinder (1) gemäß einem der vorhergehenden Ansprüche,
**dadurch gekennzeichnet,**
**dass** die Antenne (3) zirkular polarisiert ist und/oder dass die Hauptstrahlrichtung HR_{D} der Antenne (3) mit einer Längsachse L_{A} der zweiten Durchführung (8) fluchtet.

12. Elektrischer Verbinder (1) gemäß einem der vorhergehenden Ansprüche,
**dadurch gekennzeichnet,**
**dass** die Antenne (3) eingerichtet ist, eine Inband-Vollduplexdatenübertragung durchzuführen, wobei vorzugsweise eine Mittenachse der Antenne (3) zu einer Längsachse L_{A} der zweiten Durchführung (8) fluchtet.

13. Elektrischer Verbinder (1) gemäß einem der vorhergehenden Ansprüche,
**dadurch gekennzeichnet,**
**dass** die zweite Durchführung (8) rotationssymmetrisch ausgebildet ist.

14. Elektrischer Verbinder (1) gemäß einem der vorhergehenden Ansprüche,
**dadurch gekennzeichnet,**
**dass** wenigstens ein Bereich des Absorbers (7) aus einem Material hergestellt ist, das ein thermoplastisches oder ein duroplastisches Material umfasst, und unmittelbar, insbesondere bevorzugt mittels einer Presspassung, an der Antenne (3) fixiert ist.

15. System (100) aus einem elektrischen Verbinder (1) und einem zugehörigen elektrischen Gegenverbinder (1'), wobei der Verbinder (1) und der Gegenverbinder (1') jeweils als ein elektrischer Verbinder (1, 1') gemäß einem der vorhergehenden Ansprüche ausgebildet sind, wobei eine Luftschnittstelle (21) des ersten Verbinders (1) einer Luftschnittstelle (21') des Gegenverbinders (1') gegenüberliegend angeordnet ist, wobei wenigstens der Verbinder (1) und/oder der Gegenverbinder (1') jeweils um eine Längsachse (L_{A}, L_{A}') der jeweiligen zweiten Durchführung (8, 8') rotierbar ausgebildet sind/ist.
